# EUROPEAN PATENT SPECIFICATION

(11) **EP 1 780 104 B1**
(45) Date of publication and mention of the grant of the patent: **05.01.2011**
(21) Application number: 06123102.3
(22) Date of filing: 27.10.2006
(51) Int. Cl.: B62J 6/00

(54) **Winker mounting structure**
Eingebaute Blinkerstruktur
Structure pré-montée de clignotant

(30) Priority: 31.10.2005 JP 2005316622
(43) Date of publication of application: 02.05.2007
(73) Proprietor: Honda Motor Co., Ltd., Tokyo 107-8556 (JP)
(72) Inventor: Nakajima, Hiroyuki, SAITAMA 351-0193 (JP); Ogiya, Kanichiro, SAITAMA 351-0193 (JP); Nishimoto, Akihiko, SAITAMA 351-0193 (JP); Danhara, Takashi, SAITAMA 351-0193 (JP)
(74) Representative: Poulin, Gérard

(56) References cited:
- EP-A- 1 362 775
- EP-A2- 1 495 953
- WO-A-03/035456

## Description

### TECHNICAL FIELD AND PRIOR ART

The present invention relates to a winker mounting structure, and more specifically to a winker mounting structure that provides enhanced exterior appearance and visibility and facilitates painting of a base member.

With respect to the winker (direction indicator lamp) mounting structure for a motorcycle, a structure is known in the related art in which the lens portion of the winker is exposed from an opening provided in an exterior part such as a front cover.

Document JP-B No. 3504098 discloses a winker mounting structure in which, in a scooter type motorcycle equipped with a front cover provided so as to extend from a portion above the front wheel to a portion below a handlebar, an opening is provided in a crest-like convex portion formed laterally in the vehicle width direction in an upper portion of the front cover, and a lens portion of the winker is exposed through the opening. According to the mounting structure, the lens portion of the winker is formed in a raised configuration in conformity with the above-mentioned convex portion, thereby making it possible to enhance the visibility of the winker.

Patent documents EP1362775 and EP1495953 disclose also mounting structure of front turn signal for motorcycles, accordingly to the preamble of claim 1.

However, the technique according to Document JP-B No. 3504098 above involves the following problem. That is, since the opening is provided directly in the front cover, when only the surrounding portion of the winker lens is to be painted in a color different from that of the front cover in order to increase the contrast between the winker lens and its surrounding portion to achieve enhanced visibility or exterior appearance, masking becomes necessary, leading to an increase in the number of painting steps.

It is an object of the present invention to address the above-mentioned problems of the related art and provide a winker mounting structure that provides enhanced exterior appearance and visibility and facilitates the painting of a base member.

### SUMMARY OF THE INVENTION

To achieve the above-mentioned object, according to a first aspect of the present invention, there is provided a winker mounting structure for a motorcycle, including a winker unit mounted to a body cover, the winker unit having a bulb, a lens, and a base, wherein the base is mounted so as to have an exposed surface that is exposed on a front surface side of the body cover.

Further, according to a second aspect of the present invention, the bulb is supported on one surface side of a reflector portion formed integrally with the base of the winker unit, the lens is mounted so as to cover the bulb, and the entire or substantially entire peripheral edge of the lens is surrounded by the exposed surface of the base.

Further, according to a third aspect of the present invention, a recessed mounting portion for mounting the base is integrally formed in the body cover, and the body cover and the exposed surface form a substantially integral surface by mounting the base so as to be received within the mounting portion.

Further, according to a fourth aspect of the present invention, the lens has a substantially crest-like convex shape that projects outward from the exposed surface of the base.

Further, according to a fifth aspect of the present invention, a plurality of bosses each having a screw hole for fixing and supporting the base onto the mounting portion are provided on a back surface side of the base, and a dowel for determining a mounting position of the base is provided near the boss located close to the front of a body.

Further, according to a sixth aspect of the present invention, the base is painted in a painting color different from that of the body cover.

Further, according to a seventh aspect of the present invention, the body cover is a front cover to which a headlight is mounted.

According to the first aspect of the present invention, when it is desired to paint only the surrounding portion of the lens in a color different from that of the body cover, it suffices to paint only the base in a different color, whereby masking or the like becomes unnecessary and painting can be facilitated. Further, by making the base surface outwardly visible, a novel exterior appearance is provided, and a remarkable improvement can be achieved in terms of design effect. Further, since the front cover surface can be made small, the painting surface becomes small, thereby also realizing a cost reduction effect.

According to the second aspect of the present invention, the entire or substantially entire peripheral edge of the lens is surrounded by the exposed surface of the base, whereby the contour of the lens is well defined, and the visibility of the winker can be enhanced.

According to the third aspect of the present invention, since the surface of the body cover and the exposed surface of the base form an integral surface, the body cover and the base appear as if they were an integral component, whereby the exterior appearance can be enhanced.

According to the fourth aspect of the present invention, the lens appears to be projected from the body cover, whereby the visibility from the occupant and others can be enhanced.

According to the fifth aspect of the present invention, the winker unit can be accurately mounted at a predetermined position. In particular, since the position of the bulb located close to the front of the body is not easily displaced, an accurate irradiation range can be realized. Further, the position of the mating surface between the base and the body cover is accurately determined, thereby making it possible to enhance the exterior appearance.

According to the sixth aspect of the present invention, the body cover can be applied with a two-tone color for enhanced exterior appearance. Further, even in the case where the brightness or saturation of the painting color of the body cover is high, by painting the base in a painting color with low brightness or saturation, it is possible to increase the contrast between the base and the lens to achieve enhanced visibility of the winker.

According to the seventh aspect of the present invention, it is possible to provide a winker unit on the front side of the vehicle which ensures high visibility even in the state when the headlight is illuminated, and since the headlight and the winker unit are arranged in the front cover, the painting area of the front cover itself becomes small, which proves advantageous in terms of workability and cost.

### BRIEF DESCRIPTION OF THE DRAWINGS

The present invention will be better understood on reading the following description and on examining the accompanying drawings, in which:
Fig. 1 is a side view of a motorcycle to which a headlight mounting structure according to an embodiment of the present invention is applied.
Fig. 2 is a side view of a front cover to which a headlight mounting structure according to an embodiment of the present invention is applied.
Fig. 3 is a partial front view of a front cover to which a headlight mounting structure according to an embodiment of the present invention is applied.
Fig. 4 is a side view of a front cover to which a headlight mounting structure according to an embodiment of the present invention is applied.
Fig. 5 is a side view of a winker unit to which a headlight mounting structure according to an embodiment of the present invention is applied.
Fig. 6 is a partial front view of a front cover to which a headlight mounting structure according to an embodiment of the present invention is applied.
Fig. 7 is a front view of a winker unit to which a headlight mounting structure according to an embodiment of the present invention is applied.
Fig. 8 is a view as seen in the direction A of Fig. 5.
Fig. 9 is a view as seen in the direction B of Fig. 8.
Fig. 10 is a sectional view taken along the line C-C of Fig. 9.
Fig. 11 is a sectional view taken along the line D-D of Fig. 9.

### DETAILED DESCRIPTION OF PARTICULAR EMBODIMENTS

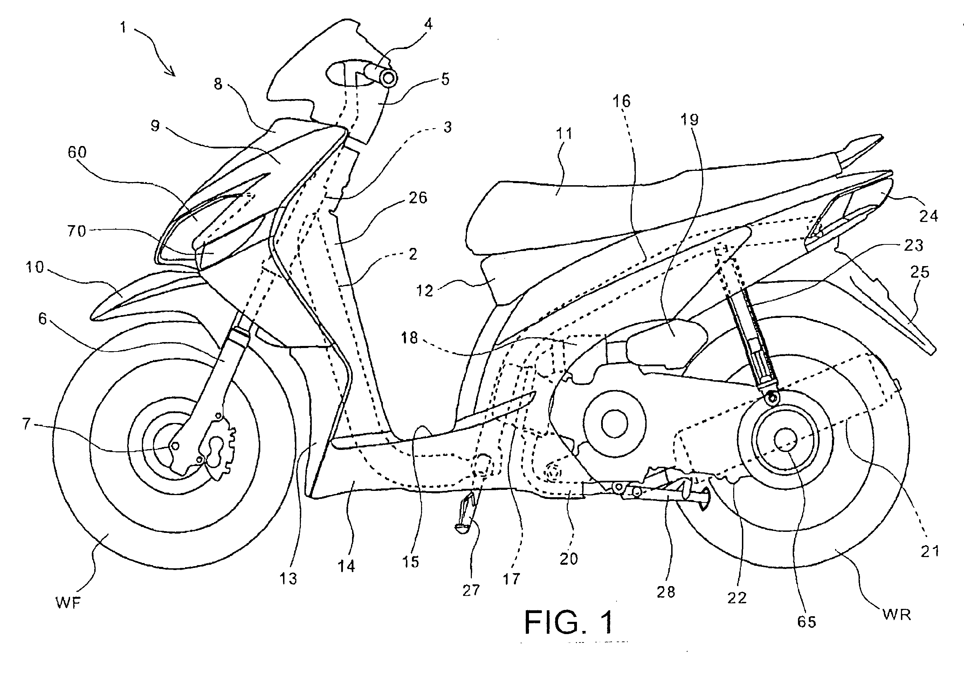

Hereinbelow, preferred embodiments of the present invention will be described in detail with reference to the drawings. Fig. 1 is a side view of an embodiment of a motorcycle to which the present invention is applied. A motorcycle 1 is a scooter type motorcycle equipped with a unit swing type power unit with a built-in continuously variable transmission. A pair of left and right front forks 6 are pivotally mounted on a head pipe 3 fixedly coupled to a main frame 2 as a body frame. A front wheel WF is rotatably journalled to an axle 7 at the lower end of the front forks 6. The front forks 6 can be steered by means of a handlebar 4 that projects laterally in the vehicle width direction from a handlebar cover 5. A front fender 10 covering the portion above the front wheel WF is steered integrally with the front forks 6. A left-right two-lamp headlight unit 60, and a winker unit 70 consisting of a left-right pair are mounted to a front cover 9 that is a body cover arranged above the front fender 10. A split-type center cover 8 is connected to an upper portion of the front cover 9 so as to form a continuous exterior surface with the front cover 9. Further, a cover panel 26 for covering the main frame 2 is arranged on the vehicle rear side of the front cover 9. At its lower portion, the cover panel 26 is joined to a step floor 15 on which the feet of the occupant are placed. Further, a front lower cover 13 connected to a lower portion of the front cover 9 is joined to an under cover 14 located below the step floor 15.

A side stand 27 is installed at a lower rear portion of the main frame 2. A seat frame 16 for supporting a seat 11, on which the occupant sits, a body cover 12, and the like is also coupled to the lower rear portion of the main frame 2. Further, one end side of a power unit 22 including an engine 17, a carburetor 18, and an air cleaner box 19 is pivotally mounted on the main frame 2 in the rear of the body. The power unit 22 is suspended by means of a rear cushion 23, which is attached to the seat frame 16, so as to be rockable about the one end side. A rear wheel WR as a drive wheel is journalled to the other end side of the power unit 22 so as to be rotatable about an axle 65. Further, an exhaust pipe 20 whose one end is connected to an exhaust port (not shown) provided in the cylinder head of the engine 17 is coupled to a muffler 21 in the rear of the vehicle. Attached to a lower portion of the power unit 22 is a main stand 28 for holding the motorcycle 1 upright when the occupant gets off the vehicle. Further, a stop lamp unit 24, in which a tail lamp and left and right winker units are integrally formed, is arranged at the end of the body cover 12 in the rear of the vehicle. A rear fender 25 that covers the rear wheel WR is mounted below the stop lamp unit 24. A winker mounting structure according to the present invention is applied to the winker unit 70 mounted on the front cover 9, and to the mounting structure for the winker unit 70.

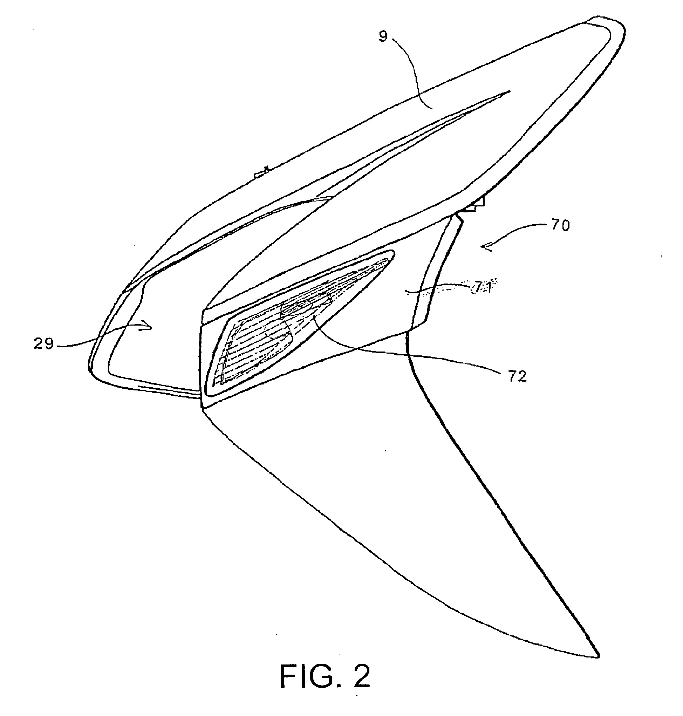

Fig. 2 is a side view of the front cover 9 with the winker unit 70 mounted. Reference numerals that are the same as those described above denote portions that are the same as or equivalent to those described above. In the front cover 9 integrally formed from resin or the like, two openings 29 through which the lens surface of the headlight unit 60 is exposed are provided on the front surface of the vehicle so as to be laterally symmetrical. The winker unit 70 according to an embodiment of the present invention is constructed such that a winker lens 72 having a surface area smaller than that of a base plate 71 is mounted on the front surface side of the base plate 71, whereby the surface of the base plate 71 in the peripheral edge portion of the winker lens 72 becomes an exposed surface exposed to the outside. Further, the winker unit 70 is mounted so as to be received in a recess formed in the side surface portion of the front cover 9.

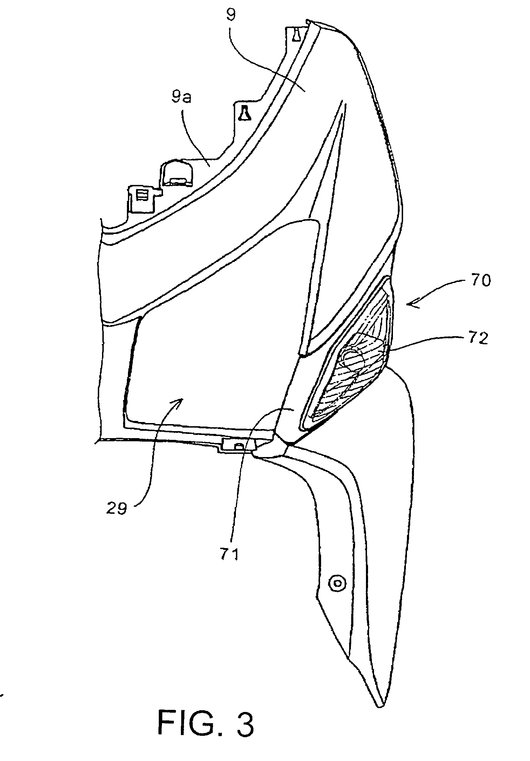

Fig. 3 is a partial front view of the front cover 9 with the winker unit 70 mounted. Reference numerals that are the same as those described above denote portions that are the same as or equivalent to those described above. Since the front cover 9 is formed so as to be laterally symmetrical, only the left half side of the front cover 9 in the vehicle width direction is shown in the drawing. A mounting portion 9a for the center cover 8 (see Fig. 1) is formed above the openings 29. The base plate 71 of the winker unit 70 is mounted so as not to project from the surface of the front cover 9, thus forming a substantially integral surface with the front cover 9. On the other hand, the winker lens 72 is formed so as to be raised in a substantially crest-like convex shape from the surface of the base plate 71. The winker lens 72 thus becomes visible as it projects from the front cover 9, thereby making it possible to attain high visibility.

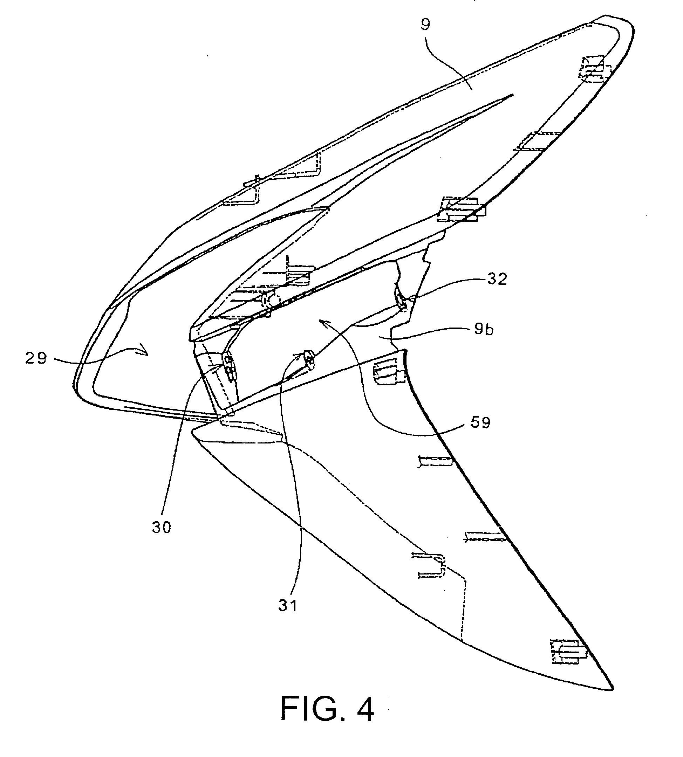

Fig. 4 is a side view of the front cover 9 with the winker unit 70 detached. Reference numerals that are the same as those described above denote portions that are the same as or equivalent to those described above. A mounting portion 9b for the winker unit 70 is formed in the side surface of the front cover 9. An opening 59 is provided at substantially the center of the mounting portion 9b, with thin plate-like fastening portions 30, 31, 32 being integrally formed in the peripheral edge of the opening 59. The winker unit 70 is fixed and supported onto the front cover 9 by means of screws or the like passed through the holes of the fastening portions 30, 31, 32.

It should be noted that the headlight unit 60 (see Fig. 1) with its left and right lens portions being exposed through the openings 29 of the front cover 9 is constructed so to be capable of optical axis adjustment by rotatably journalling a support shaft, which is installed at substantially the central portion of each side surface of the headlight unit 60, to the back surface side of the front cover 9. Further, the headlight unit 60 is a left-right two-lamp headlight formed by placing two bulbs in a single case and covering the bulbs respectively with symmetrical left and right lens. The headlight 60 is constructed so as to be supported not only on the front cover 9 but also on the body side by bringing an engaging portion, which is provided substantially at the central portion on the back surface side of the case, into engagement with a headlight stay welded onto the head pipe 3 and extending toward the front of the body.

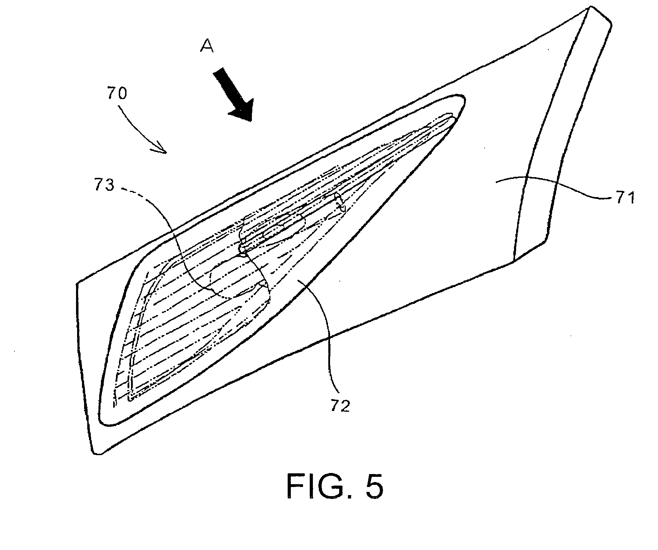

Fig. 5 is a side view of the winker unit 70. Reference numerals that are the same as those described above denote portions that are the same as or equivalent to those described above. The winker lens 72 formed in a substantially rhomboid or wing shape is mounted to the base plate 71 that is formed in a substantially rectangular shape. A bulb 73 is formed at the bottom of the base plate 71 inside the winker lens 72. The winker unit 70 according to this embodiment is formed separately from the front cover 9, and also the base plate 71 and the winker lens 72 are formed as separate components, thereby facilitating the operation of painting the base plate 71 in a unique single color. When only the surrounding portion of the winker lens 72 is to be painted in a color different from that of the front cover 9 in order to increase the contrast between the winker lens 72 and its surroundings (when, for example, the front cover 9 is painted in yellow, and only the surrounding portion of the winker lens 72 is painted in gray), it suffices to paint the base plate 71 formed as a separate component in a different color, whereby masking becomes unnecessary and painting can be facilitated. Further, in accordance with this, painting with respect to the mounting portion 9b (see Fig. 4) formed in the front cover 9 also becomes unnecessary. Further, by painting the front cover 9 and the base plate 71 in different colors, the front cover 9 is applied with a two-tone color for enhanced exterior appearance.

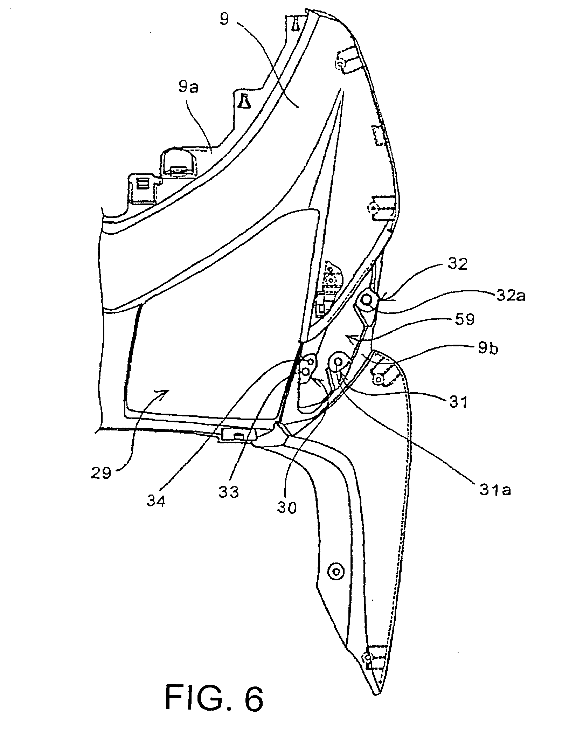

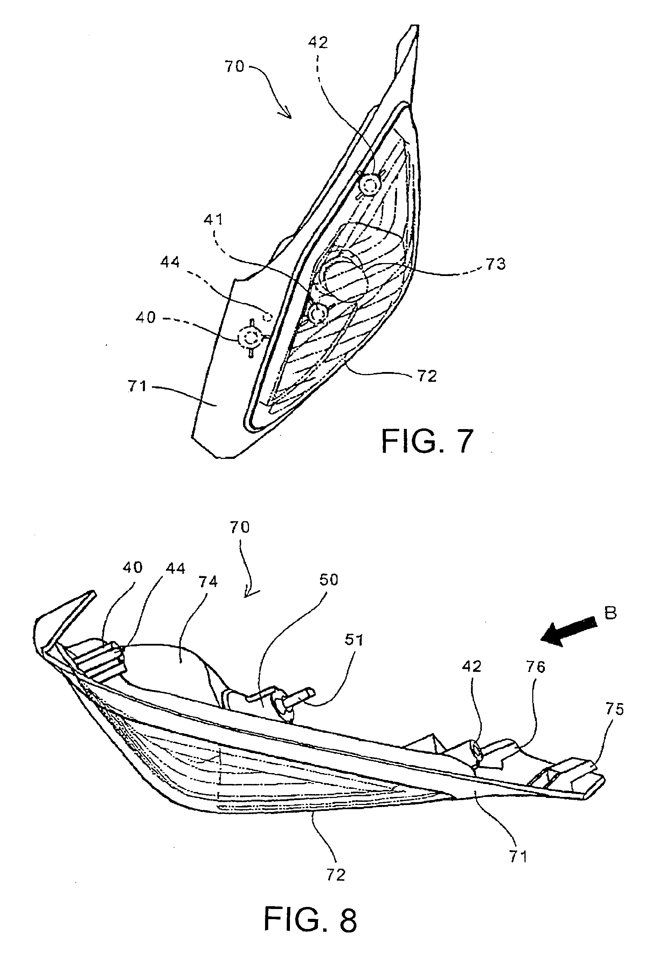

Fig. 6 is a partial front view of the front cover 9 with the winker unit 70 detached. Reference numerals that are the same as those described above denote portions that are the same as or equivalent to those described above. The fastening portions 30, 31, 32 are formed so that their surfaces in contact with the back surface side of the winker unit 70 are orientated in a direction substantially forward of the vehicle. Further, the fastening portions 31 and 32 respectively have holes 31a, 32a, through which screws or the like are passed, provided at substantially the central portions thereof. Also, the fastening portion 30 has formed therein, in addition to a hole 33, a dowel hole 34 that is brought into fitting engagement with a positioning dowel (Fig. 8).

Fig. 7 is a side view of the winker unit 70. Reference numerals that are the same as those described above denote portions that are the same as or equivalent to those described above. Fig. 7 shows a state as viewed from the front of the body. Formed on the back surface side of the base plate 71 are a boss 40 corresponding to the hole 33 on the front cover 9 side, a dowel 44 corresponding to the dowel hole 34, a boss 41 corresponding to the hole 31a, and a boss 42 corresponding to the hole 32a. The bosses 40, 41, 42 are each formed as a substantially cylindrical member with a screw hole provided at the center thereof, and a plurality of ribs are provided in the peripheral edge portion of each of the bosses 40, 41, 42 in order to enhance the rigidity.

Fig. 8 is a view as seen in the direction A of Fig. 5. Reference numerals that are the same as those described above denote portions that are the same as or equivalent to those described above. The dowel 44 is formed so that its projecting length is larger than that of the boss 42. A substantially crest-like reflector portion 74 is formed on the back surface side of the base plate 71. The bulb 73 (see Fig. 7) is inserted from an opening formed at substantially the top of the reflector portion 42, and a connector 50 for supplying electric power from a wiring 51 is connected to a terminal provided at the rear end thereof. It should be noted that engaging claws 75, 76 provided at the vehicle rear-side edge of the base plate 71 are used for bringing the base plate 71 into engagement with the cover panel 26 (see Fig. 1) side.

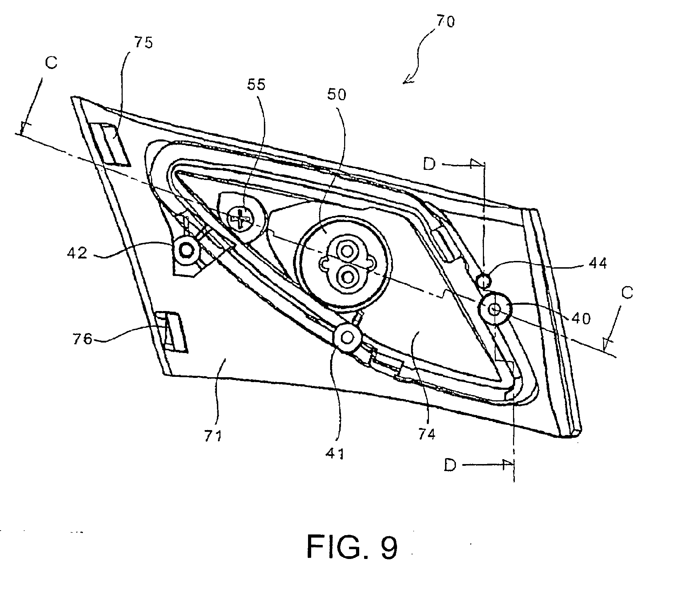

Fig. 9 is a view as seen in the direction B of Fig. 8. Reference numerals that are the same as those described above denote portions that are the same as or equivalent to those described above. Fig. 9 corresponds to a view as seen from the rear of the vehicle, with the winker unit 70 being mounted to the front cover 9. The bosses 40, 41, 42, and the dowel 44 are arranged so as to surround the peripheral edge of the substantially rhomboid or wing-shaped reflector portion 74 that is formed integrally with the base plate 71. Further, the fixing and supporting of the winker unit 70 onto the front cover 9 is achieved by, in the state where the position of the winker unit 70 has been determined by bringing the dowel 44 into fitting engagement with the dowel hole 34 (see Fig. 6), fastening the screws inserted from the vehicle rear side of the holes 31a, 32a, 33 (see Fig. 6) into the respective screw holes of the bosses 40, 41, 42. It should be noted that the winker lens 72 is fastened onto the base plate 71 by means of a screw 55 screwed in from the back side of the winker unit 70.

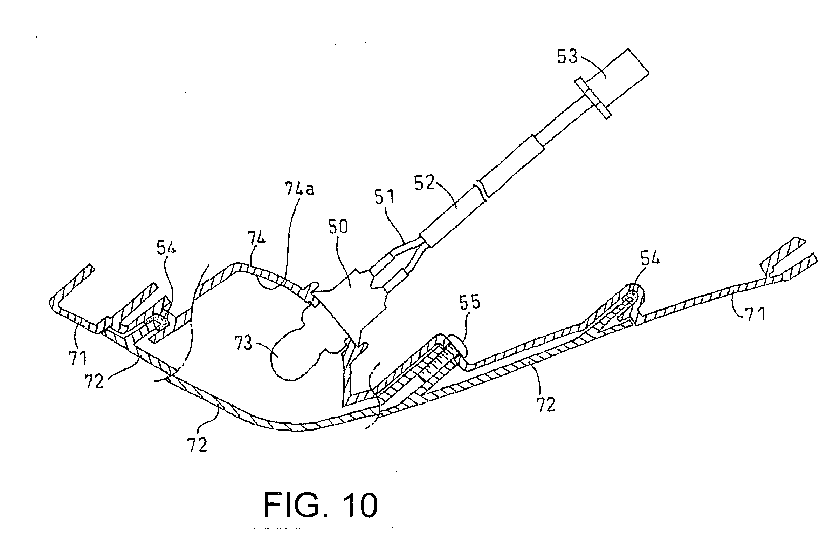

Fig. 10 is a sectional view taken along the line C-C of Fig. 9. Reference numerals that are the same as those described above denote portions that are the same as or equivalent to those described above. Arranged in the engaging portion between the peripheral edge portion of the winker lens 72 and the base plate 71 is a packing member 54 for preventing moisture, dust, or the like in the outside air from entering and contacting a reflector surface 74a of the reflector portion 74 or the bulb 73. The wiring 51, a wiring 42 in which the wiring 51 is covered with a tube made of resin or the like, and, in addition, a connector 53 connected to a main harness (not shown) serving as the electric power supply source are coupled in rear of the connector 50 that is connected to the bulb 73.

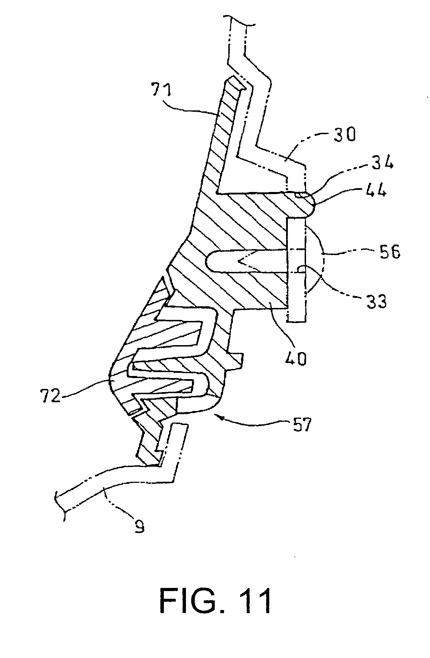

Fig. 11 is a sectional view taken along the line D-D of Fig. 9. Reference numerals that are the same as those described above denote portions that are the same as or equivalent to those described above. Of the three bosses provided in the back surface of the base plate 71, the boss 40 located close to the front of the body is fastened onto the fastening portion 30 by fastening a self-tapping screw 56 through the hole 33 with the fastening portion 30 there between. At this time, the dowel 44 is brought into fitting engagement with the dowel hole 34 provided in the fastening portion 30 to thereby accurately determine the fixing position of the winker unit 70 as a whole, and the distal end of the dowel 44 reaches the rear surface side of the fastening portion 30. Since the fastening portion 30 having the positioning function due to the dowel 44 is provided in the front of the body and near the bulb 73, the winker unit 70 can be fixed and supported in place with the position of the bulb 73 with respect to the front cover 9 being accurately determined. It should be noted that a drain hole 57 is provided in a lower portion of the base plate 71; should moisture enter through the gap between the base plate 71 and the winker lens 72, the moisture is thus quickly drained.

As has been described above, with the winker mounting structure according to the present invention, the winker lens is installed on the base plate that is separate from the front cover, and the base plate is mounted to the front cover so as to be partially exposed to the outside. Accordingly, when only the surrounding portion of the winker lens is to be painted in a color different from that of the front cover, it suffices to paint only the base plate in a different color, whereby masking or the like becomes unnecessary and painting can be facilitated. Further, since the winker lens is formed so as to be raised in a substantially crest-like convex shape from the surface of the base plate, the winker lens becomes projected from the front cover, thereby making it possible to enhance the visibility of the winker. Furthermore, the dowel is provided on the back side of the base plate and brought into fitting engagement with the dowel hole formed in the mounting portion for the front cover, thereby making it possible to mount the winker unit at a predetermine position.

It should be understood as a matter of course that the configurations of the base plate and winker lens, the placement of the boss or dowel on the back side of the base plate, and the like are not limited to those of the above-described embodiments but can be modified in various ways.

## Claims

1. A winker mounting structure for a motorcycle, comprising a winker unit (70) mounted to a body cover, the winker unit (70) including a bulb (73), a lens (72), and a base (71),
**characterized in that** the base (71) is mounted so as to have an exposed surface that is exposed on a front surface side of the body cover, and
said base (71) is painted in a painting color different from that of the body cover.

2. The winker mounting structure according to Claim 1,
wherein the bulb (73) is supported on one surface side of a reflector portion formed integrally with the base (71) of the winker unit (70), and the lens (72) is mounted so as to cover the bulb (73); and
the entire or substantially entire peripheral edge of the lens is surrounded by the exposed surface of the base (71).

3. The winker mounting structure according to Claim 1 or 2,
wherein a recessed mounting portion (9b) for mounting the base (71) is integrally formed in the body cover; and
the body cover and the exposed surface form a substantially integral surface by mounting the base (71) so as to be received within the mounting portion (9b).

4. The winker mounting structure according to any one of Claims 1 to 3, wherein the lens (73) has a substantially crest-like convex shape that projects outward from the exposed surface of the base (71).

5. The winker mounting structure according to any one of Claims 1 to 4, wherein a plurality of bosses each having a screw hole for fixing and supporting the base (71) onto the mounting portion (9b) are provided on a back surface side of the base (71); and
a dowel for determining a mounting position of the base (71) is provided near the boss located close to the front of a body.

6. The winker mounting structure according to any one of Claims 1 to 5, wherein the body cover is a front cover to which a headlight is mounted.

## Patentansprüche

1. Blinkerbefestigungsstruktur für ein Motorrad, umfassend eine Blinkereinheit (70), die an einer Aufbauabdeckung befestigt ist, wobei die Blinkereinheit (70) eine Glühbirne (73), eine Linse (72) und eine Basis (71) umfasst,
**dadurch gekennzeichnet, dass** die Basis (71) derart befestigt ist, dass sie eine freiliegende Fläche aufweist, die an einer Vorderseite der Aufbauabdeckung frei liegt, und
dass die Basis (71) in einer Farbe bemalt ist, die sich von derjenigen der Aufbauabdeckung unterscheidet.

2. Blinkerbefestigungsstruktur nach Anspruch 1,
wobei die Glühbirne (73) an einer Seite einer Fläche eines Reflektorabschnitts gehalten ist, der integral mit der Basis (71) der Blinkereinheit (70) ausgebildet ist, und die Linse (72) derart angebracht ist, dass sie die Glühbirne (73) abdeckt; und
wobei der gesamte oder im Wesentlichen der gesamte Umfangsrand der Linse von der freiliegenden Fläche der Basis (71) umgeben ist.

3. Blinkerbefestigungsstruktur nach Anspruch 1 oder 2,
wobei ein vertiefter Befestigungsabschnitt (9b) zum Anbringen der Basis (71) integral in der Aufbauabdeckung ausgebildet ist; und die Aufbauabdeckung und die freiliegende Fläche eine im Wesentlichen integrale Fläche bilden, indem die Basis (71) so angebracht ist, dass sie innerhalb des Befestigungsabschnitts (9b) aufgenommen ist.

4. Blinkerbefestigungsstruktur nach einem der Ansprüche 1 bis 3, wobei die Linse (73) eine im Wesentlichen kuppenartige, konvexe Form aufweist, die von der freiliegenden Fläche der Basis (71) nach außen vorsteht.

5. Blinkerbefestigungsstruktur nach einem der Ansprüche 1 bis 4, wobei eine Mehrzahl von Augen an einer Rückseite der Basis (71) vorgesehen sind, die jeweils ein Schraubloch zum Befestigen und Halten der Basis (71) an dem Befestigungsabschnitt (9b) aufweisen; und
ein Stift zum Bestimmen einer Befestigungsposition der Basis (71) nahe dem Auge vergesehen ist, das sich nah an der Vorderseite eines Aufbaus befindet.

6. Blinkerbefestigungsstruktur nach einem der Ansprüche 1 bis 5, wobei die Aufbauabdeckung eine Vorderabdeckung ist, an welcher ein Scheinwerfer angebracht ist.

## Revendications

1. Structure de montage de clignotant pour une motocyclette, comprenant une unité de clignotant (70) montée sur un capot de carrosserie, l'unité de clignotant (70) comprenant une ampoule (73), un verre (72) et une base (71),
**caractérisée en ce que** la base (71) est montée afin d'avoir une surface exposée qui est exposée sur un côté de surface avant du capot de carrosserie, et
ladite base (71) est peinte d'une couleur de peinture différente de celle du capot de carrosserie.

2. Structure d'un montage de clignotant selon la revendication 1,
dans laquelle l'ampoule (73) est supportée sur un côté de surface d'une partie de réflecteur formée d'un seul tenant avec la base (71) de l'unité de clignotant (70), et le verre (72) est monté afin de recouvrir l'ampoule (73) ; et
l'intégralité ou sensiblement l'intégralité du bord périphérique du verre est entourée par la surface exposée de la base (71).

3. Structure de montage de clignotant selon la revendication 1 ou 2,
dans laquelle une partie de montage évidée (9b) pour monter la base (71) est formée d'un seul tenant dans le capot de carrosserie ; et
le capot de carrosserie et la surface exposée forent une surface sensiblement solidaire en montrant la base (71) de sorte qu'elle soit reçue à l'intérieur de la partir de montage (9b).

4. Structure de montage de clignotant selon l'une quelconque des revendications 1 à 3, dans laquelle le verre (73) a une forme convexe sensiblement en forme de crête qui fait saillie vers l'extérieur à partir de la surface exposée de la base (71).

5. Structure de montage de clignotant selon l'une quelconque des revendications 1 à 4, dans laquelle on prévoit une pluralité de bossages, ayant chacun un trou de vis pour fixer et supporter la base (71) sur la partie de montage (9b), sur un côté de surface arrière de la base (71); et
une goupille pour déterminer une position de montage de la base (71) est prévue à proximité du bossage situé à proximité de l'avant d'un corps.

6. Structure de montage de clignotant selon l'une quelconque des revendications 1 à 5, dans laquelle le capot de carrosserie est un couvercle avant sur lequel un phare est monté.
